# EUROPÄISCHE PATENTSCHRIFT

(11) **EP 2 805 807 B1**
(45) Veröffentlichungstag und Bekanntmachung des Hinweises auf die Patenterteilung: **11.10.2017**
(21) Anmeldenummer: 14168856.4
(22) Anmeldetag: 19.05.2014
(51) Int. Cl.: B29C 65/02, B29C 65/20, E06B 7/16, C08L 23/16, C08K 3/06

(54) **Dichtungsprofil aus EPDM, Ethylen-Propylen Copolymer und Schwefel zur Nutzung für Tür- und Fensterdichtungen**
Sealing strip of EPDM, ethylene-propylene copolymer and sulfur for seals of doors and windows
Joint d'étanchéité de matériau de EPDM, éthylène-propylène copolymer et sulfure pour l'utilisation comme joint des portes et fenêtres

(30) Priorität: 23.05.2013 DE 102013209608
(43) Veröffentlichungstag der Anmeldung: 26.11.2014
(73) Patentinhaber: Semperit AG Holding, 1031 Wien (AT)
(72) Erfinder: Ledzinski, Janusz, 2632 Wimpassing (AT); Holzner, Armin, 2630 Ternitz (AT); Supplit, Ralf, 2700 Wiener Neustadt (AT)
(74) Vertreter: Müller Schupfner & Partner Patent- und Rechtsanwaltspartnerschaft mbB

(56) Entgegenhaltungen:
- EP-A1- 0 593 859
- WO-A1-2008/094741
- WO-A1-2013/131207
- Eigenschaften elastomermodifizierter Polyolefine - Rezeptureinflüsse des Schwefel-Beschleuniger-Systems S. Ilisch, R. Androsch, H.-J. Radusch, Halle, E. SÏ pirk, I. HudecÏ , Bratislava (Slovak Republic) KGK Kautschuk Gummi Kunststoffe 55. Jahrgang, Nr. 1-2/2002

## Beschreibung

Die vorliegende Erfindung betrifft ein Dichtungsprofil, insbesondere für Fenster- und Türen, aus einer Werkstoffmischung, sowie ein Verfahren zur Herstellung eine Bauelements, insbesondere ein Fenster- oder Türelement, welches das Dichtungsprofil umfasst.

Bei den Werkstoffmischungen der in Rede stehenden Art handelt es sich insbesondere um Kunststoffe bzw. um Mischungen verschiedener Kunststoffe, wie sie für Dichtungen jeglicher Art verwendet werden. So werden z. B. Elastomerdichtungsprofile in PVC-Fensterprofile eingezogen und anschließend verklebt bzw. auch nicht. Nachteilig ist, dass die Verklebung einen zusätzlichen Arbeitsgangs und damit höhere Kosten bedingt. Werden die auf Gehrung geschnittenen Dichtungsprofile allerdings nicht verklebt, bildet sich im Laufe der Zeit ein Spalt, in welchen z. B. Regenwasser eindringen kann, da die Dichtungsprofile über ihre Gebrauchszeit schrumpfen. Ein Verschweißen der Elastomer-Dichtungsprofile ist nicht möglich, da diese aufgrund der Vernetzung nicht erweichen (schmelzen) können. Um dieses Problem zu umgehen, wurden in der Vergangenheit vermehrt thermoplastischen Dichtungen (TPE) verwendet, welche untereinander in einem Arbeitsgang mit dem PVC-Fensterprofil verschweißbar sind. Allerdings bringen die thermoplastischen Dichtungen Nachteile hinsichtlich Kosten, Verarbeitbarkeit, Lebensdauer etc. mit sich. Der Wunsch besteht daher seit langer Zeit nach einem Werkstoff bzw. einer Werkstoffmischung, welcher bzw. welche als Elastomer bezeichnet und verarbeitet werden kann bzw. dessen Eigenschaften aufweist, gleichzeitig z. B. aber auch verschweißbar ist.

Es ist daher Aufgabe der vorliegenden Erfindung, ein Dichtungsprofil aus einer Werkstoffmischung, insbesondere für Fenster- und Türen, sowie ein Verfahren zur Herstellung eines Bauelements bereitzustellen, welche die oben beschriebenen Nachteile beseitigen.

Diese Aufgabe wird durch ein Dichtungsprofil gemäß Anspruch 1, sowie durch ein Verfahren zur Herstellung eines Bauelements gemäß Anspruch 6 gelöst. Weitere Vorteile und Merkmale ergeben sich aus den Unteransprüchen und der Beschreibung.

Erfindungsgemäß umfasst ein Dichtungsprofil aus einer Werkstoffmischung, insbesondere für Fenster- und Türen, die folgende Zusammensetzung
- EPDM ca. 10 bis 50 Volumenprozent
- Copolymer ca. 8 bis 50 Volumenprozent
- Füllstoff ca. 5 bis 70 Volumenprozent
- Paraffinisches Öl ca. 0 bis 20 Volumenprozent
- Beschleuniger-Schwefelspender ca. 0,1 bis 5 Volumenprozent
- Schwefel ca. 0,5 bis 5 Volumenprozent
- Zinkoxyd ca. 0,5 bis 3 Volumenprozent

Die Werkstoffmischung ist weiter dadurch gekennzeichnet, dass die Werkstoffmischung einen ersten Zustand aufweist, in welchem der EPDM -Anteil unvernetzt ist, und dass die Werkstoffmischung einen zweiten Zustand aufweist, in welchem die Werkstoffmischung verformbar und/oder verformt ist, und dass die Werkstoffmischung einen dritten Zustand aufweist, in welchem die Werkstoffmischung vernetzt ist, wobei der dritte Zustand nach dem zweiten Zustand vorliegt. Die Werkstoffmischung ist damit kein klassischer thermoplastischer Elastomer (TPE) wie beispielsweise PP/EPDM (Propylen/Ethylen-Propylen-Dien-Kautschuk oder auch TPV genannt). Hierbei, also z. B. bei TPV, handelt es sich um Werkstoffe, bei welchen elastische Polymerketten (vernetztes EPDM) in thermoplastischem Material (PP) eingebunden (dispergiert) sind. Sie lassen sich in einem rein physikalischen Prozess in Kombination mit Wärmeeinwirkung und anschließenden Abkühlung verarbeiten. D. h. nach der Formgebung findet keine chemische Vernetzung durch Wärmeeinwirkung statt. Ein derartiger Werkstoff kann vermahlen und wiederverarbeitet werden. Bei der Herstellung wird bei einem TPE das Material extrudiert und die Formstabilität entsteht durch Abkühlen des Materials. Die Werkstoffmischung wird nach der Formgebung (Extrusion) nicht abgekühlt, sondern durch Erhitzung vernetzt. Vorteilhafterweise bleibt die Werkstoffmischung bei höheren Temperaturen formstabil, während z. B. ein TPE aus PP/EPDM bei denselben Temperaturen aufschmilzt und umgeformt werden kann. Die Werkstoffmischung weist kein thermoplastisches Verhalten auf, da sie durch Hitzeeinwirkung nicht mehr verformt werden kann. Bei der Werkstoffmischung handelt es sich um das oben genannte Gemisch. Bei dem Copolymer handelt es sich um einen Thermoplast oder einen thermoplastischen Elastomer (TPE). Mit Vorteil erfolgt die Vernetzung nach der Formgebung, zweckmäßigerweise durch die Einwirkung von Temperatur (ähnlich wie bei Elastomeren). Vorteilhafterweise schmilzt die Werkstoffmischung unter Wärmeeinwirkung nicht wie ein Thermoplast auf, ist aber trotzdem schweißbar. Dadurch können identische Verarbeitungsverfahren wie bei gewöhnlichen Elastomerprodukten verwendet werden, was eine Herstellung von Koextrudaten dieses verschweißbaren Werkstoffes mit Elastomerprodukten ermöglicht. Vorteilhafterweise ist der EPDM-Anteil im ersten Zustand unvernetzt. Mit anderen Worten ist die Werkstoffmischung also im ersten Zustand unvernetzt. Im zweiten Zustand ist die Werkstoffmischung ausgelegt, verformt zur werden. Im zweiten Zustand ist der EPDM-Anteil bzw. ist die Werkstoffmischung noch nicht vernetzt. Die Vernetzung erfolgt erst nach der Formgebung, bevorzugt unter Wärmeeinwirkung. Mit Vorteil ist die Werkstoffmischung vernetzt bzw. weist vernetzte Bereiche oder auch Segmente auf. Mit Vorteil ist damit die Schweißbarkeit erzielbar. Das Copolymer kann beim Erhitzen/Schweißen aufschmelzen. Da der EPDM-Anteil im dritten Zustand vernetzt vorliegt, kommt es dabei zu keiner signifikanten Verformung (Schweißraupe). An der Kontaktstelle kann sich die Schmelze von z. B. zwei aneinander geschweißten Dichtungsprofilen vermischen, so dass eine feste Verbindung entsteht. Mit anderen Worten sind im dritten Zustand der EPDM-Anteil und das Copolymer ineinander vermischt. Bei der Werkstoffmischung handelt es sich nicht um ein thermoplatisches Polymer (TPE), da die Werkstoffmischung nicht mehr durch Hitzeeinwirkung verformt werden kann.

Die Werkstoffmischung ist dadurch gekennzeichnet, dass der Elastomer-Anteil EPDM ist, und dass der EPDM-Anteil etwa 10 bis 50 Volumenprozent der Werkstoffmischung beträgt. Der Zusatz ist ein Copolymer mit verschiedenen Alkenen, z. B. Ethen, Propen, Buten, Octen etc. Es versteht sich, dass die Werkstoffmischung neben dem EPDM-Anteil und dem Copolymer noch weitere Bestandteile enthält. Versuche haben gezeigt, dass die nachfolgende Rezeptur besonders gute Eigenschaften in Bezug auf die Anforderungen, die im Bereich der Dichtungstechnik vorliegen, aufweist:
- EPDM ca. 10 bis 50 Volumenprozent
- Copolymer ca. 8 bis 50 Volumenprozent
- Füllstoff ca. 5 bis 70 Volumenprozent
- Paraffinisches Öl ca. 0 bis 20 Volumenprozent
- Beschleuniger-Schwefelspender ca. 0,1 bis 5 Volumenprozent
- Schwefel ca. 0,5 bis 5 Volumenprozent
- Zinkoxyd ca. 0,5 bis 3 Volumenprozent

Schwefel bzw. Schwefelbeschleuniger (Beschleuniger-Schwefelspender) dienen als Vernetzer. Die Vernetzung der Werkstoffmischung erfolgt also mit Schwefel bzw. Schwefelbeschleuniger und zwar nach der Formgebung. Die Vernetzung erfolgt mit Vorteil bei einer Temperatur in einem Bereich von etwa 150-250 °C. Zur Vernetzung können Standardverfahren aus der Elastomerverarbeitung eingesetzt werden, z. B. Vulkanisation im Salzbad bei 210 °C.

Zweckmäßigerweise weist das Copolymer keine Anbindungsstellen und/oder Verzweigungsstellen für einen Vernetzer oder in einem Vernetzungsprozess auf. Mit Vorteil kommt ein Polymergemisch mit elastomerem Charakter zum Einsatz.

In einer bevorzugten Ausführungsform ist das Copolymer ein Propylen-Ethylen Copolymer, z. B. vom Typ Versify 2300 der Fa. DOW. Es versteht sich, dass auch mit anderen Polymeren bzw. Polymergemischen die genannten Effekte und Vorteile erzielt werden können, so dass das Copolymer nicht auf dieses Beispiel beschränkt ist.

Zweckmäßigerweise ist die Werkstoffmischung dadurch gekennzeichnet, dass die Werkstoffmischung im dritten Zustand mit sich selbst und/oder mit einem Elastomerwerkstoff verschweißbar und/oder verschweißt ist. Der große Vorteil liegt darin, dass die Werkstoffmischung im dritten Zustand sozusagen ein chemisch vernetztes Elastomer darstellt, welches verschweißbar ist. Ausmaß der Elastizität und Festigkeit der Verschweißung können vorteilhafterweise über das Verhältnis von EPDM-Anteil zum Copolymer eingestellt werden. Die Werkstoffmischung kann beispielsweise in einem Arbeitsgang bei der Fertigung eines Fenster- oder Türrahmens verschweißt werden. In der Regel werden auf Gehrung geschnittene PVC Fenster- oder Türrahmen mittels eines Schweißspiegels verschweißt. Vorteilhafterweise können nun bei der gleichen Temperatur und in dem gleichem Arbeitsgang, bei welchem die Fenster- oder Türrahmen verbunden/verschweißt werden, die in die Fenster- oder Türrahmen eingezogenen Dichtungsprofile, welche aus der Werkstoffmischung gefertigt sind, ebenfalls untereinander verschweißt werden.

Die Werkstoffmischung ist dadurch gekennzeichnet, dass sie Füllstoff aufweist, und dass der Füllgrad im Vergleich zu TPE/TPV höher sein kann. Mögliche Füllstoffe sind beispielsweise Ruße, Kohlenstofffasern, mineralische Füllstoffe wie Calciumcarbonat oder Talkum, Glasfasern etc. oder auch Mischungen der genannten Materialien. Zweckmäßigerweise wirkt der Füllstoff verstärkend, während der EPDM-Anteil die Festigkeit und die Elastizität bewirkt. Der Füllgrad liegt bevorzugt in einem Bereich von etwa 5 bis 70 %, bevorzugt bei etwa 30 bis 40 %.

Vorteilhafterweise ist die Werkstoffmischung dadurch gekennzeichnet, dass die Werkstoffmischung bei einer Temperatur von etwa 150° bis 300° C verschweißbar ist. Besonders bevorzugt erfolgt die Erweichung oder auch Verschweißung bei etwa 180 bis 260 °C. Mit Vorteil kann dadurch eine Verschweißung der Werkstoffmischung z. B. in einem Arbeitsgang mit der Verschweißung eines Fensterrahmens erfolgen.

Vorzugsweise ist die Werkstoffmischung dadurch gekennzeichnet, dass der EPDM-Anteil Segmente oder Bereiche bildet. Mit Vorteil bildet der EPDM-Anteil im dritten Zustand insbesondere Weichsegmente innerhalb des Werkstoffgemisches. Diese Weichsegmente ermöglichen die Elastizität der Werkstoffmischung. Zweckmäßigerweise kann die Werkstoffmischung eine Polymerphase aufweisen. Weiter zweckmäßigerweise kann der EPDM-Anteil Segmente oder Bereiche innerhalb der Polymerphase bilden. Weiter bildet der Zusatz mit Vorteil Segmente oder Bereiche, welche die Schweißbarkeit ermöglichen. Zweckmäßigerweise können die durch den Zusatz gebildeten Segmente oder Bereiche beim Erhitzen aufschmelzen.

Erfindungsgemäß umfasst ein Dichtungsprofil, insbesondere für Fenster- und Türen, die oben genannte Werkstoffmischung,
wobei die Werkstoffmischung hergestellt ist durch die Schritte:
- Mischen des EPDM-Anteils und des Copolymers;
- Bereitstellen von Füllstoff, Paraffinischem Öl, Beschleuniger-Schwefelspender, Schwefel und Zinkoxyd und Zumischen;
- Formen der Werkstoffmischung;
- Vernetzen der Werkstoffmischung.
Gemischt wird zweckmäßigerweise in einem Innenmischer bis etwa 150 °C, bevorzugt mit mehreren Mischstufen.

Die Vernetzung erfolgt nach der Formgebung, bevorzugt unter Temperatureinwirkung.

Vorteilhafterweise ist die Werkstoffmischung so hergestellt, dass sie schweißbar ist, insbesondere mit sich verschweißbar ist.
Erfindungsgemäß umfasst ein Verfahren zur Herstellung einer Werkstoffmischung, insbesondere für Fenster- und Türdichtungen, die Schritte:
- Bereitstellen von EPDM-Material und einem Copolymer;
- Mischen des EPDM-Materials und des Copolymers;
- Bereitstellen von Füllstoff, Paraffinischem Öl, Beschleuniger-Schwefelspender, Schwefel und Zinkoxyd und Zumischen zum Erzeugen der Werkstoffmischung;
- Formen der Werkstoffmischung;
- Vernetzen der Werkstoffmischung.

Erfindungsgemäß ist ein Bauelement, insbesondere ein Fenster- oder ein Türelement, vorgesehen, welches ein Dichtungsprofil umfasst, welches aus dem erfindungsgemäßen Werkstoff gefertigt ist, wobei zwei Bauelemente und die entsprechenden Dichtungsprofile in einem gleichen Arbeitsgang verbindbar sind. Bevorzugt erfolgt die Verbindung durch eine stoffschlüssige Verbindung, beispielsweise durch eine Verschweißung mit einem Schweißspiegel. Zweckmäßigerweise ist das Material des Bauelements z. B. PVC. Damit sind mit Vorteil in einem Arbeitsgang zumindest zwei Bauelemente und ihre (darin z. B. eingelegten) Dichtungsprofile jeweils miteinander verschweißbar, d. h. die beiden Bauelemente untereinander und die beiden Dichtungsprofile untereinander.

Erfindungsgemäß ist ein Verfahren zur Herstellung eines Bauelements vorgesehen, umfassend die Schritte:
- Bereitstellen von zumindest zwei Bauelementen, beispielsweise Fenster- oder Türrahmen;
- Bereitstellen zumindest zweier Dichtungsprofile aus der oben genannten Werkstoffmischung;
- Einziehen der Dichtungsprofile in die entsprechenden Bauelemente;
- Verschweißen der Bauelement und der Dichtungsprofile untereinander in einem Arbeitsgang.

Erfindungsgemäß besteht ein Dichtungsprofil, insbesondere für Fenster und Türen, aus einer Werkstoffmischung, welche einen EPDM-Anteil und ein Copolymer umfasst, und ist dadurch gekennzeichnet, dass die Werkstoffmischung einen ersten Zustand aufweist, in welchem der EPDM-Anteil unvernetzt ist, und dass die Werkstoffmischung einen zweiten Zustand aufweist, in welchem die Werkstoffmischung verformbar und/oder verformt ist, und dass die Werkstoffmischung einen dritten Zustand aufweist, in welchem die Werkstoffmischung vernetzt ist, wobei der dritte Zustand nach dem zweiten Zustand vorliegt. Ein derartiges Dichtungsprofil kommt bevorzugt im Bereich Fenster, Türen, Fassaden und Tore zum Einsatz. Ebenfalls werden derartige Dichtungsprofile bei der sogenannten nachgeschalteten Rahmenfertigung von Dichtungsprofilen verwendet, d. h. Dichtungsprofile werden z. B. auf Gehrung geschnitten und verschweißt.

Einzelne Merkmale der beschriebenen Ausführungsformen können selbstverständlich miteinander kombiniert werden. Insbesondere sei darauf hingewiesen, dass die Vorteile und Merkmale der Werkstoffmischung auch für die nach dem erfindungsgemäßen Verfahren hergestellte Werkstoffmischung sowie die erfindungsgemäßen Verfahren und das erfindungsgemäße Bauelement gelten, wie auch umgekehrt und untereinander.

## Patentansprüche

1. Dichtungsprofil, insbesondere für Fenster und Türen,
aus einer Werkstoffmischung,
welche die folgende Zusammensetzung aufweist:
10 bis 50 Volumenprozent EPDM,
8 bis 50 Volumenprozent Copolymer,
5 bis 70 Volumenprozent Füllstoff,
0 bis 20 Volumenprozent Paraffinisches Öl,
0,1 bis 5 Volumenprozent Beschleuniger-Schwefelspender,
0,5 bis 5 Volumenprozent Schwefel
0,5 bis 3 Volumenprozent Zinkoxyd,
wobei das Copolymer ein Thermoplast oder ein thermoplastisches Elastomer ist.

2. Dichtungsprofil nach Anspruch 1,
wobei das Copolymer ein Propylen-Ethylen Copolymer ist.

3. Dichtungsprofil nach Anspruch 1 oder 2, wobei die Werkstoffmischung einen ersten Zustand aufweist, in welchem der EPDM-Anteil unvernetzt ist, und
wobei die Werkstoffmischung einen zweiten Zustand aufweist, in welchem die Werkstoffmischung verformbar und/oder verformt ist, und
wobei die Werkstoffmischung einen dritten Zustand aufweist, in welchem die Werkstoffmischung vernetzt ist,
wobei der dritte Zustand nach dem zweiten Zustand vorliegt.

4. Dichtungsprofil nach einem der vorhergehenden Ansprüchen,
**dadurch gekennzeichnet,**
**dass** die Werkstoffmischung im dritten Zustand mit sich selbst oder mit einem Elastomerwerkstoff verschweißbar und/oder verschweißt ist.

5. Dichtungsprofil nach einem der vorhergehenden Ansprüchen,
**dadurch gekennzeichnet,**
**dass** die Werkstoffmischung bei einer Temperatur von etwa 150° bis 300°C verschweißbar ist.

6. Verfahren zur Herstellung eines Bauelements, insbesondere ein Fenster- oder Türelement,
umfassend die Schritte:
- Bereitstellen von zumindest zwei Bauelementen, beispielsweise Fenster- oder Türrahmen;
- Bereitstellen zumindest zweier Dichtungsprofile nach einem der vorhergehenden Ansprüche;
- Einziehen der Dichtungsprofile in die entsprechenden Bauelemente;
- Verschweißen der Bauelemente und Dichtungsprofile untereinander in einem Arbeitsgang.

7. Verfahren nach Anspruch 6,
wobei die Bauelemente und die Dichtungsprofile bei einer Temperatur von etwa 150° bis 300° verschweißt werden.

## Claims

1. Gasket profile, in particular for windows and doors, made of a mixture of materials
which has the following composition:
from 10 to 50% by volume of EPDM,
from 8 to 50% by volume of copolymer,
from 5 to 70% by volume of filler,
from 0 to 20% by volume of paraffinic oil,
from 0.1 to 5% by volume of accelerator-sulfur donor,
from 0.5 to 5% by volume of sulfur,
from 0.5 to 3% by volume of zinc oxide,
where the copolymer is a thermoplastic or a thermoplastic elastomer.

2. Gasket profile according to Claim 1,
where the copolymer is a propylene-ethylene copolymer.

3. Gasket profile according to Claim 1 or 2, where the mixture of materials has a first state in which the EPDM fraction is uncrosslinked, and where the mixture of materials has a second state in which the shape of the mixture of materials can be, and/or has been, changed, and where the mixture of materials has a third state in which the mixture of materials has been crosslinked,
where the third state is subsequent to the second state.

4. Gasket profile according to any of the preceding claims,
**characterized in that**
in the third state the mixture of materials can be, and/or has been, welded to itself or to an elastomer material.

5. Gasket profile according to any of the preceding claims,
**characterized in that**
the mixture of materials can be welded at a temperature of about 150° to 300°C.

6. Process for the production of a component, in particular a window element or door element,
comprising the following steps:
- provision of at least two components, for example window frames or door frames;
- provision of at least two gasket profiles according to any of the preceding claims;
- introduction of the gasket profiles into the corresponding components;
- welding of the components and gasket profiles to one another in a single operation.

7. Process according to Claim 6,
where the components and the gasket profiles are welded at a temperature of about 150° to 300°.

## Revendications

1. Profilé d'étanchéité, en particulier pour des fenêtres et des portes, constitué d'un mélange de matériaux présentant la composition suivante :
10 à 50 % en volume d'EPDM,
8 à 50 % en volume de copolymère,
5 à 70 % en volume de matière de charge,
0 à 20 % en volume d'huile paraffinique,
0,1 à 5 % en volume d'un accélérateur-fournisseur de soufre,
0,5 à 5 % en volume de soufre,
0,5 à 3 % en volume d'oxyde de zinc,
le copolymère étant un thermoplastique ou un élastomère thermoplastique.

2. Profilé d'étanchéité selon la revendication 1,
dans lequel le copolymère est un copolymère de propylène-éthylène.

3. Profilé d'étanchéité selon la revendication 1 ou 2, dans lequel le mélange de matériaux présente un premier état dans lequel la part de EPDM est non réticulée, et
le mélange de matériaux présente un second état dans lequel le mélange de matériaux est déformable et/ou déformé, et
le mélange de matériaux présente un troisième état dans lequel le mélange de matériaux est réticulé,
le troisième état se présentant après le second état.

4. Profilé d'étanchéité selon l'une des revendications précédentes, dans lequel
le mélange de matériaux dans le troisième état est soudable et/ou soudé avec lui-même ou avec un matériau d'élastomère.

5. Profilé d'étanchéité selon l'une des revendications précédentes, dans lequel le mélange de matériaux est soudable à une température d'environ 150° à 300 °C.

6. Procédé de réalisation d'un élément de construction, en particulier d'un élément de fenêtre ou de porte,
comprenant les étapes suivantes consistant à :
- fournir au moins deux éléments de construction, par exemple des cadres de fenêtre ou de porte ;
- fournir au moins deux profilés d'étanchéité selon l'une des revendications précédentes ;
- intégrer les profilés d'étanchéité dans les éléments de construction correspondants ;
- souder les éléments de construction et les profilés d'étanchéité entre eux en une seule passe.

7. Procédé selon la revendication 6,
dans lequel on soude les éléments de construction et les profilés d'étanchéité à une température d'environ 150° à 300°.
